Europäisches Patentamt

European Patent Office

Office européen des brevets

(19)

(11) **EP 0 909 067 A1**

(12) **EUROPEAN PATENT APPLICATION**
published in accordance with Art. 158(3) EPC

(43) Date of publication:
**14.04.1999 Bulletin 1999/15**

(21) Application number: **98902264.5**

(22) Date of filing: **17.02.1998**

(51) Int. Cl.$^6$: **H04L 27/20**

(86) International application number:
**PCT/JP98/00657**

(87) International publication number:
**WO 98/38775 (03.09.1998 Gazette 1998/35)**

(84) Designated Contracting States:
**DE FI FR GB IT NL**

(30) Priority: **27.02.1997 JP 58605/97**

(71) Applicant:
**MATSUSHITA ELECTRIC INDUSTRIAL CO., LTD.**
**Kadoma-shi, Osaka 571-8501 (JP)**

(72) Inventors:
• **SAITO, Yoshiko**
**Yokosuka-shi, Kanagawa 239-0806 (JP)**

• **UESUGI, Mitsuru**
**Yokosuka-shi, Kanagawa 239-0831 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **MODULATOR AND MODULATION METHOD**

(57)    Interpolation filters 23 and 25 frequency convert the frequencies of an in-phase component and a quadrature phase component of a digital baseband signal to four times the frequency of an intermediate frequency. $\Delta\Sigma$ modulation circuits 23 and 26 $\Delta\Sigma$ modulate the frequency converted signals. LPF 31 and LPF 32 remove an unnecessary component from the $\Delta\Sigma$ modulated signal. Switching circuit 27 selects a signal passed through LPF according to the order of an in-phase component, a code inverted component of a quadrature phase component, a code inverted component of the in-phase component and the quadrature phase component, and outputs them as a digital orthogonal signal. N bits D/A converter 34 converts the digital orthogonal signal into an analogue orthogonal signal.

FIG. 3

EP 0 909 067 A1

**Description**

Technical Field

The present invention relates to a modulation apparatus and a modulation method for orthogonal modulating a digital basaband signal, used in a digital mobile communication and so on.

Background Art

In a digital mobile communication system such as portable telephone, as disclosed in Japanese unexamined patent publication No. 6-21991, a modulator, which divides a transmitted signal into an in-phase component and a quadrature phase component, $\Delta\Sigma$ modulates each component then orthogonal modulates them, was used.

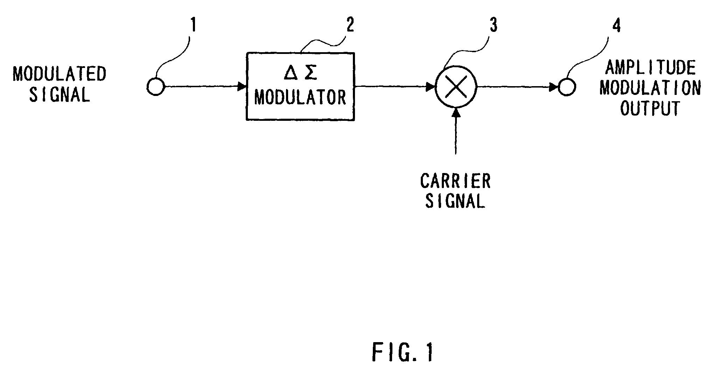

In the following, a conventional modulator is explained with drawings. FIG.1 is a block diagram illustrating a configuration of a conventional modulator.

In FIG.1, $\Delta\Sigma$ modulator 2 converts a modulated signal inputted from input terminal 1 into a binary signal and outputs it to multiplying circuit 3. And multiplexing circuit 3 generates an amplitude modulated signal by multiplying the binary signal outputted from $\Delta\Sigma$ modulator 2 by a carrier signal and outputs it to output terminal 4.

Next the operations of a conventional modulator having the above configuration are explained.

First a modulated signal inputted from input terminal 1 is $\Delta\Sigma$ modulated at $\Delta\Sigma$ modulator 2, then a binary $\Delta\Sigma$ modulated signal is outputted. Next an amplitude modulated signal is generated by multiplying the $\Delta\Sigma$ modulated signal by a carrier signal, which is outputted to another apparatus via output terminal 4. As described above, a conventional modulator modulates a transmission signal into a digital orthogonal signal.

However in the conventional modulator described above, the multiplication is necessary for an orthogonal modulation under a high sampling frequency that is not avoidable to process the $\Delta\Sigma$ modulation. Because that requires a high-rate multiplier, it has the problem that consumed electric power becomes high.

Disclosure of the Invention

The object of the present invention is to provide a modulator without a high-rate multiplier to make consumed electric power low.

This object is achieved by a modulator for setting a center frequency of a digital baseband signal at four times the frequency of an intermediate frequency to $\Delta\Sigma$ modulate, and switching at a switching circuit an output signal of $\Delta\Sigma$ modulation circuit and its code inverted signal at a sampling frequency of four times the frequency of an intermediate frequency to select.

And this object is achieved by a modulator for arbitrarily setting a center frequency of a digital baseband signal to $\Delta\Sigma$ modulate and selecting a carrier signal according to an output signal from a $\Delta\Sigma$ modulation circuit.

Brief Description of Drawings

FIG.1 is a block diagram illustrating a configuration of a conventional modulator;
FIG.2 is a block diagram illustrating a configuration at a modulator in the first embodiment of the present invention;
FIG.3 is a block diagram illustrating a configuration at a modulator in the second embodiment of the present invention;
FIG.4 is a wave diagram illustrating the relation of signal and noise at a modulator in the second embodiment of the present invention;
FIG.5 is a block diagram illustrating a configuration at a modulator in the third embodiment of the present invention;
FIG.6 is a block diagram illustrating a configuration at a modulator in the fourth embodiment of the present invention; and
FIG.7 is a block diagram illustrating a configuration at a modulator in the fifth embodiment of the present invention.

Best Mode for Carrying Out Invention

In the following, the best embodiments of the present invention are explained with drawings.

(First embodiment)

In the first embodiment of the present invention, an explanation is given to a modulator for an orthogonal modulation which increases the center frequency of a digital baseband signal to four times the frequency of an intermediate frequency to $\Delta\Sigma$ modulate, then selects the signal and its code converted signal at a switching circuit by switching at a sampling frequency with four times the frequency of an intermediate frequency.

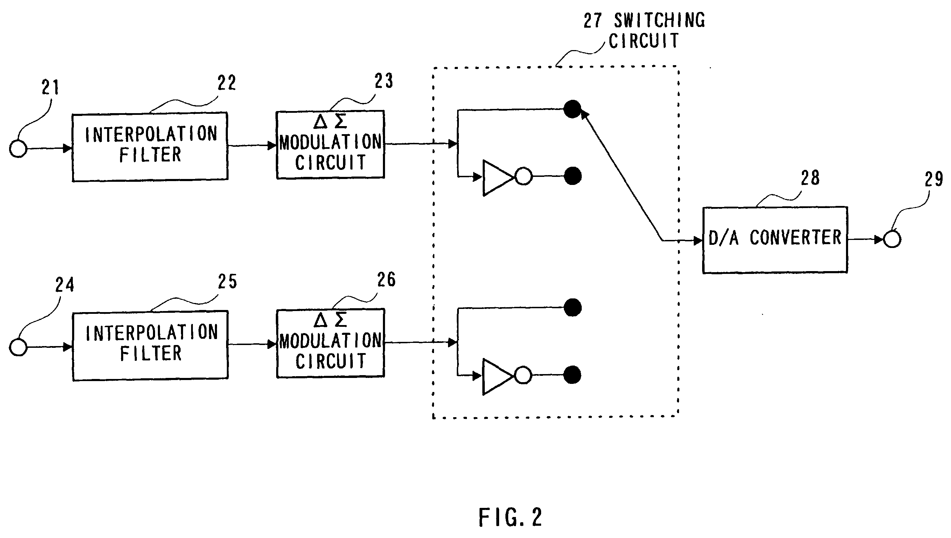

FIG.2 is a block diagram illustrating a configuration of a modulator in the first embodiment of the present invention. At the apparatus, in the case of transmitting a signal by radio, a carrier wave of high frequency is multiplied by a digital baseband signal after its center frequency is increased at a certain intermediate frequency.

Interpolation filter 22 increases a center frequency of an In-phase component (abbreviated as "I signal" in the following) of a digital baseband signal inputted from input terminal 21 to four times the frequency of an intermediate frequency, then outputs the signal with the increased frequency to $\Delta\Sigma$ modulation circuit 23. In the similar manner, interpolation filter 25 increases a center frequency of a quadrature phase component (abbreviated as "Q signal" in the following) of a digital baseband signal inputted from input terminal 24 to four times the frequency of an intermediate frequency, then outputs the signal with the increased frequency to $\Delta\Sigma$ modulation circuit 26.

$\Delta\Sigma$ modulation circuit 23 converts the I signal inputted from interpolation filter 22 into a binary signal by $\Delta\Sigma$ modulating, then outputs the converted signal to switching circuit 27. In the similar manner, $\Delta\Sigma$ modulation circuit 26 converts the Q signal inputted from interpolation filter 25 into a binary signal by $\Delta\Sigma$ modulating, then outputs the converted signal to switching circuit 27.

Switching circuit 27 generates code converted signals from the $\Delta\Sigma$ modulated I signal and Q signal (abbreviated as "nI signal" and "nQ signal" in the following), executes an orthogonal conversion by selecting the four types of signals (I signal , Q signal, nI signal and nQ signal) at a sampling period of a fourth the period of an intermediate period according to the order of I signal, nQ signal, nI signal, and Q signal, then outputs the obtained digital orthogonal signal with the intermediate frequency to D/A converter 28.

D/A converter 28 converts the digital orthogonal signal inputted from switching circuit 27 into an analogue orthogonal signal and outputs the converted analogue orthogonal signal to another apparatus via output terminal 29.

Next an orthogonal modulation processing at a modulator in the first embodiment of the present invention is explained in detail.

Orthogonal modulated wave s(t) with an intermediate frequency is represented as a formulation (1) illustrated in the following, where I signal component is i(t), Q signal component is q(t) and an intermediate frequency is f0.

$$s(t)=i(t)\times\cos(2\pi f0t)-q(t)\times\sin(2\pi f0t) \tag{1}$$

And because sampling frequency fs is set at the four time the frequency of an intermediate frequency f0, the above formulation (1) is transformed into the formulation (2) illustrated in the following.

$$s(t)=i(t)\times\cos(2\pi fst/4)-q(t)\times\sin(2\pi fst/4) \tag{2}$$

At this point, orthogonal modulated wave s(t) is equivalent to a digital orthogonal signal outputted by sampling at a sampling period of Ts=1/fs . Therefore the formulation (2) is transformed into the formulation (3) up to (6) illustrated in the following where n is an integer number.

$$s(t)=i(t) \qquad (t=4nTs) \tag{3}$$

$$s(t)=-q(t) \qquad (t=(4n+1)Ts) \tag{4}$$

$$s(t)=-i(t) \qquad (t=(4n+2)Ts) \tag{5}$$

$$s(t)=q(t) \qquad (t=(4n+3)Ts) \tag{6}$$

That is, the orthogonal modulation can be achieved for switching circuit 27 to sequentially select a signal according to the order of I signal, nQ signal, nI signal and Q signal at sampling period Ts.

Next a flow of the operations at a modulator in the first embodiment of the present invention is explained.

First a center frequency of an I signal inputted to input terminal 21 is increased to four times the frequency of an intermediate frequency at interpolation filter 22 and the signal is $\Delta\Sigma$ modulated at $\Delta\Sigma$ modulation circuit 23. In the similar manner, a center frequency of a Q signal inputted to input terminal 24 is increased to four times the frequency of an intermediate frequency at interpolation filter 25 and the signal is $\Delta\Sigma$ modulated at $\Delta\Sigma$ modulation circuit 26.

Next switching circuit 27 generates code converted signals; nI signal and nQ signal; from the $\Delta\Sigma$ modulated I

signal and Q signal. And it sequentially selects a signal according to the order of I signal, nQ signal, nI signal and Q signal at a sampling period of a fourth the period of an intermediate period and outputs the orthogonal modulated digital signal with an intermediate frequency.

Next at D/A converter, the digital orthogonal signal is converted into an analogue orthogonal signal and the converted analogue signal is outputted to another apparatus via output terminal 29.

As described above, at the modulator in the embodiment of the present invention, the orthogonal modulation is processed at the switching circuit, the calculation scale in this case is reduced much less than the case of using a high-rate multiplier, which allows to decrease the consumed electric power.

(Second embodiment)

In the second embodiment of the present invention, an explanation is given to a modulator for an orthogonal modulation which increases the center frequency of a digital baseband signal to four times the frequency of an intermediate frequency to $\Delta\Sigma$ modulate, passes the $\Delta\Sigma$ modulated signal through a low pass filter (abbreviated as "LPF"), then selects the signal and its code converted signal at a switching circuit by switching at a sampling frequency with four times the frequency of an intermediate frequency.

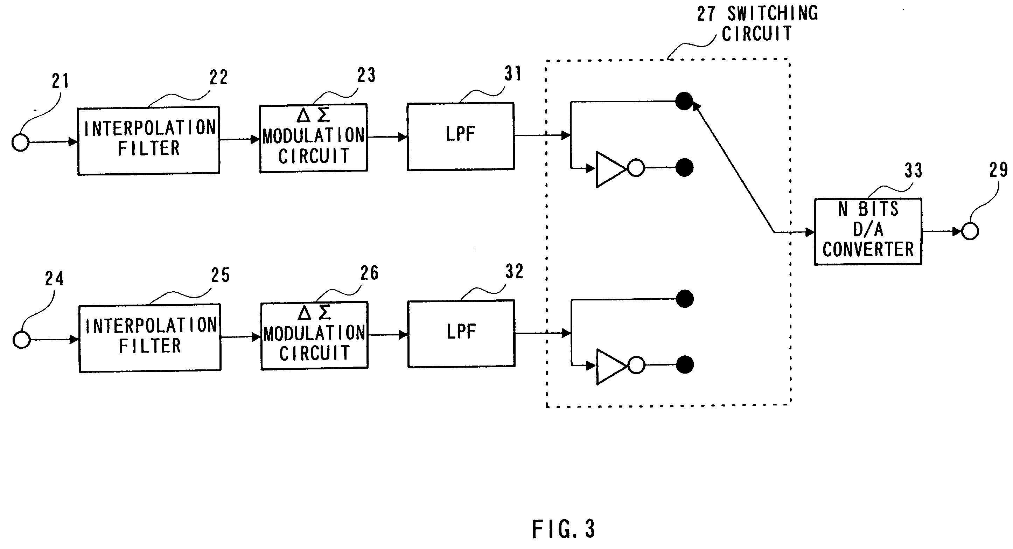

FIG.3 is a block diagram illustrating a configuration at a modulator in the second embodiment of the present invention. In addition the common part to that in FIG.1 has the same symbol as that in FIG.1 to omit the explanation.

As illustrated in FIG.3, the differences between a modulator in the first embodiment of the present invention and a modulator in the second embodiment of the present invention are LPF 31, which is inserted between $\Delta\Sigma$ modulation circuit 23 and switching circuit 27, and LPF 32, which is inserted between $\Delta\Sigma$ modulation circuit 24 and switching circuit 27.

LPF 31 is a low pass filter with the frequency characteristics having a notch at a second the frequency of a sampling frequency and removes an unnecessary component such as quantization noise and so on at around a second the frequency of a sampling frequency. As well as LPF 31, LPF 32 is a low pass filter with the frequency characteristics having a notch at a second the frequency of a sampling frequency and removes an unnecessary component such as quantization noise and so on at around a second the frequency of sampling frequency.

Switching circuit 27 generates a nI signal from an I signal passed through LPF 31, generates a nQ signal from a Q signal passed through LPF 32, processes an orthogonal modulation by selecting a signal according to the order of I signal, nQ signal, nI signal and nI signal at the sampling period with a fourth the period of a sampling period, and outputs a digital orthogonal signal with the intermediate frequency. N bits D/A converter 34 converts a digital orthogonal signal outputted from switching circuit 27 into an analogue orthogonal signal, and outputs the converted analogue signal to another apparatus via output terminal 29.

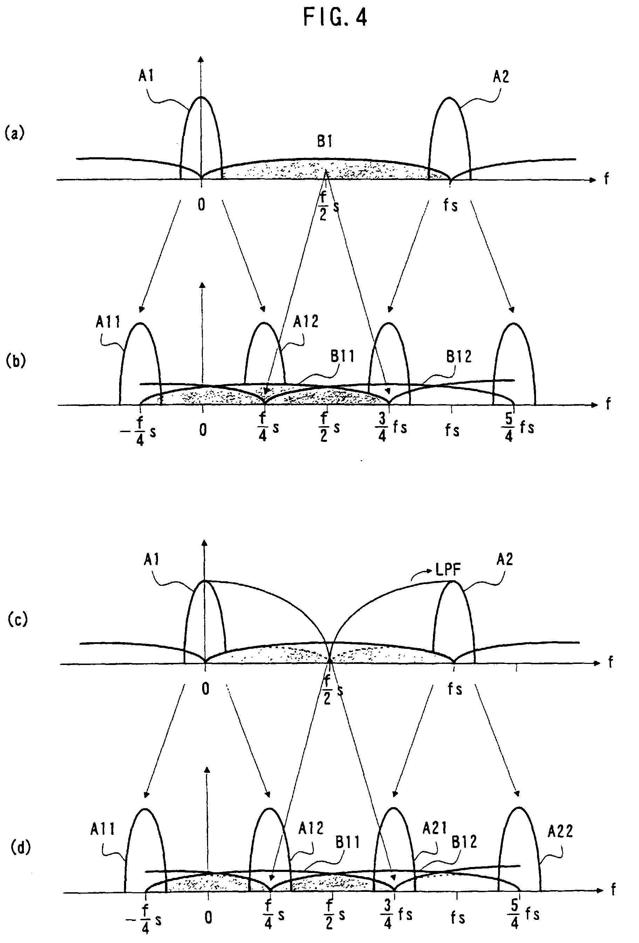

Next the relation of signal and noise at a modulator in the second embodiment of the present invention is explained with a wave diagram in FIG.4. In addition in the second embodiment of the present invention, an I signal is explained, however a Q signal is also explained in the similar manner.

FIG.4A is a waveform diagram illustrating a waveform of an I signal before passing through LPF, and FIG.4B is a waveform diagram of a waveform of the signal when an I signal without passing LPF is orthogonal modulated. And FIG.4C is a waveform diagram illustrating a waveform of an I signal after passing through LPF, and FIG.4D is a waveform diagram of a waveform of the signal when an I signal passed through LPF is orthogonal modulated.

As illustrated in FIG.4A, the $\Delta\Sigma$ modulation outputs of I signal (A1 and A2) have the peak at the intervals of sampling period fs. And a quantization noise included in $\Delta\Sigma$ modulation outputs (B1) have the frequency characteristics with a peak at a second the frequency of sampling frequency fs according to the noise-shaving characterized by $\Delta\Sigma$ modulation system.

And as illustrated in FIG.4B, when the $\Delta\Sigma$ modulation outputs (A1 and A2) of I signal are orthogonal modulated at the intermediate frequency which center frequency is a fourth the frequency of sampling frequency, the peaks of digital orthogonal signals (A11, A12, A21 and A22) appear at a position shifted by the amount of the intermediate frequency: $f0=fs/4$ from the peak position of the $\Delta\Sigma$ modulation outputs (A1 and A2) of I signal.

On the other hand, when the quantization noise (B1) is orthogonal modulated at the intermediate frequency which center frequency is a fourth the frequency of s sampling frequency, the peaks of the orthogonal modulated quantization noises (B11, B12) appear at $fs/2-f0=fs/2-fs=fs/4$ . At this time, the peaks of the shifted digital orthogonal signals (A11, A12, A21, A22) and the peaks of the quantization noises (B11, B12) overlap. That brings a decrease of the S/N ratio (signal to noise ratio), which prevents a high precision modulation.

On the contrast, as illustrated in FIG.4C, by passing the $\Delta\Sigma$ modulation outputs (A1 and A2) through the LPF having the characteristics to generate a notch at a second the frequency of a sampling frequency, the quantization noise is partially removed and the influence of quantization noise (B1) at a second the frequency of sampling frequency fs is decreased.

By the manner described above as illustrated in FIG.4D, in the case of orthogonal modulating quantization noise (B1) at the intermediate frequency which center frequency is a fourth the frequency of a sampling frequency, the quantization noises (B11, B12) are decreased at the intermediate frequency f0=fs/4 that is the shifted peak positions of the digital orthogonal signals (A11, A12, A21, A22). That allows to improve the S/N ration and process a high precision modulation.

Specifically, in the phase precision in the experimental result of the above embodiment of the present invention, the average value is less than 1.14° and the maximum value is 3.33° while the average value is less than 5° and the maximum value is 20° in the phase precision in the specification of GMS (Global Systems for Mobile communication). In addition, this experimental result is just one of example values, and the better results are expected under other conditions.

Next a flow of the operations at a modulator in the second embodiment of the present invention is explained.

First a center frequency of an I signal inputted to input terminal 21 is increased to four times the frequency of an intermediate frequency at interpolation filter 22, the signal is $\Delta\Sigma$ modulated at $\Delta\Sigma$ modulation circuit 23 and the unnecessary frequency component is removed at LPF 31. In the similar manner, an intermediate frequency of a Q signal inputted to input terminal 24 is increased to four times the frequency of an intermediate frequency at interpolation filter 25, the signal is $\Delta\Sigma$ modulated at $\Delta\Sigma$ modulation circuit 26 and the unnecessary frequency component is removed at LPF 32.

Next at switching circuit 27, an I signal and a Q signal, in which the unnecessary frequency components are removed, and their code converted signals nI signal and a nQ signal are generated. And the signals are selected sequentially according to the order of I signal, nQ signal, nI signal and Q signal at the sampling period of a fourth the frequency of the intermediate frequency, and the digital orthogonal modulated signals with the intermediate frequency are output.

Next the digital orthogonal signal is converted into an analogue orthogonal signal at D/A converter 34, and the converted analogue orthogonal signal is outputted to another apparatus via output terminal 29.

In the manner described above at a modulator in the second embodiment of the present invention, by passing the $\Delta\Sigma$ modulation outputs of I signal and Q signal through the LPF, since the S/N ratio can be improved by decreasing the influence of the quantization noise when orthogonal modulated, the high precision modulation can be achieved.

(Third embodiment)

In the third embodiment of the present invention, an explanation is given to a modulator for an orthogonal modulation which $\Delta\Sigma$ modulates a digital baseband signal after increasing its center frequency at four times the frequency of an intermediate frequency, selects the signal, its code converted signal and its relayed signal at a switching circuit by switching at a sampling frequency with four times the frequency of an intermediate frequency and adds those signals.

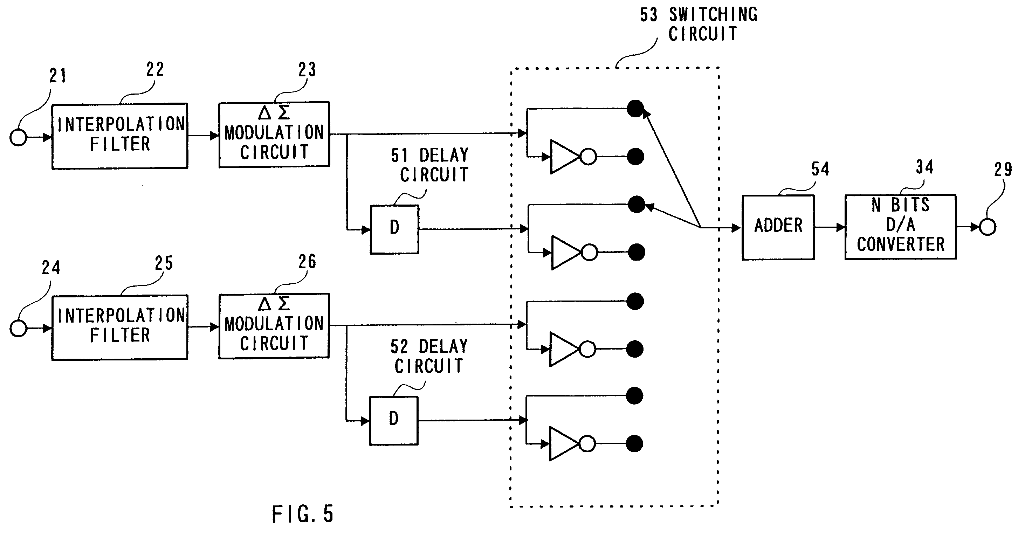

FIG.5 is a block diagram illustrating a configuration at a modulator in the third embodiment of the present invention. In addition the common part to that in FIG.3 has the same symbol as that in FIG.3 to omit the explanation.

Delay circuit 51 delays the sampling time for the $\Delta\Sigma$ modulated I signal by one sampling time and outputs the delayed I signal to switching circuit 53. In the similar manner, delay circuit 52 delays the sampling time for the $\Delta\Sigma$ modulated Q signal by one sampling time and outputs the delayed Q signal to switching circuit 53.

Switching circuit 53 generates a nI signal and nQ signal respectively from the I signal passed through $\Delta\Sigma$ modulation circuit 23 and the Q signal passed through $\Delta\Sigma$ modulation circuit 26, and generates a delayed nI signal and a delayed nQ signal respectively from the delayed I signal passed through delay circuit 51 and a delayed Q signal passed through delay circuit 52. And it selects a pair of two types of signals from the eight types of signals at the sampling period of a fourth the period of an intermediate period according to the order of a pair of I signal and delayed I signal, a pair of nQ signal and delayed nQ signal, nI signal and delayed nI signal and Q signal and delayed Q signal, and outputs them to adder 54.

Adder 54 adds a pair of signals concurrently outputted from switching circuit 53, generates a digital orthogonal signal with the intermediate frequency and outputs the digital orthogonal signal to N bits D/A converter 34.

As a digital orthogonal signal s(t) outputted from adder 54, s(t) of formulation (7) up to formulation (10) illustrated in the following are repeated.

$$s(t)=i(t)-i(t-1) \qquad (t=4nTs) \qquad\qquad (7)$$

$$s(t)=-q(t)+q(t-1) \qquad (t=(4n+1)Ts) \qquad\qquad (8)$$

$$s(t)=-i(t)+i(t-1) \qquad (t=(4n+2)Ts) \qquad\qquad (9)$$

$$s(t)=q(t)-q(t-1) \qquad (t=(4n+3)Ts) \qquad\qquad (10)$$

The digital orthogonal signal s(t) appears in the case where the frequency characteristics of LPF 31 and LPF 32 is the primary function in the second embodiment of the present invention, and is the same signal as the digital orthogonal signal orthogonal modulated at switching circuit 27.

By the configuration described above, compared to the case of using LPF, the downsizing of the modulator can be achieved with the influence of quantization noise decreased.

(Fourth embodiment)

In the fourth embodiment of the present invention, an explanation is given to a modulator for an orthogonal modulation which one bit $\Delta\Sigma$ modulates a digital baseband signal after increases the sampling frequency to a desired one, and code processing a carrier wave corresponding to the output value of one bit $\Delta\Sigma$ modulation to add. In this case, the one bit $\Delta\Sigma$ modulation is referred to the case where the output value of $\Delta\Sigma$ modulation is one bit.

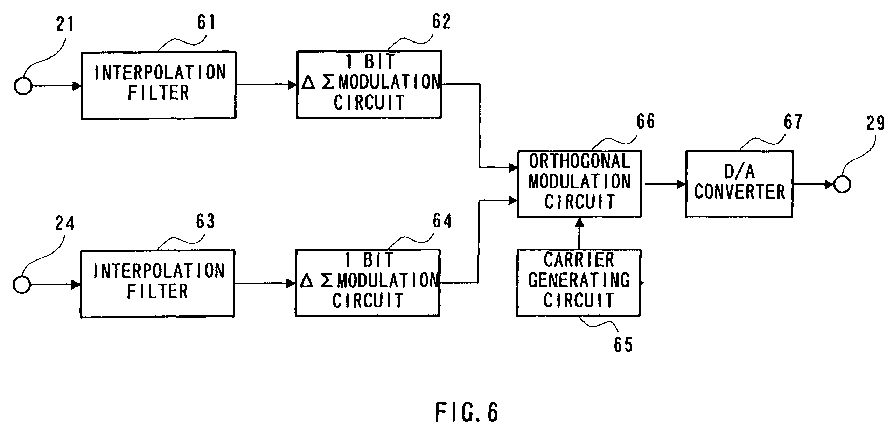

FIG.6 is a block diagram illustrating a configuration at a modulator in the fourth embodiment of the present invention. In addition the common part to that in FIG.1 has the same symbol as that in FIG.1 to omit the explanation.

In FIG.6, interpolation filter 61 increases the frequency of an I signal inputted from input terminal 21 to a desired sampling frequency fs. In the similar manner, interpolation filter 63 increases the frequency of a Q signal inputted from input terminal 21 to a desired sampling frequency fs.

One bit $\Delta\Sigma$ modulation circuit 62 one bit $\Delta\Sigma$ modulates an I signal inputted from interpolation filter 61, and outputs the one bit $\Delta\Sigma$ modulated I signal to orthogonal modulation circuit 66. In the similar manner, One bit $\Delta\Sigma$ modulation circuit 64 one bit $\Delta\Sigma$ modulates an G signal inputted from interpolation filter 63, and outputs the one bit $\Delta\Sigma$ modulated Q signal to orthogonal modulation circuit 66. Carrier generating circuit 65 generates a cosine carrier and a sine carrier to transmit a signal by radio, and outputs the carriers to orthogonal modulation circuit 66.

Orthogonal modulation circuit 66 processes the coding for the cosine carrier and the sine carrier inputted from carrier generating circuit 65 corresponding to the values of the one bit $\Delta\Sigma$ modulated I signal and Q signal. Then it adds the coded cosine carrier and the coded sine carrier to orthogonal modulate, and outputs the digital orthogonal signals to D/A converter 67.

Herein, since component i(t) of one bit $\Delta\Sigma$ modulated I signal and component q(t) of one bit $\Delta\Sigma$ modulated Q signal are both 1 or both -1, digital orthogonal signal s(t) is shown as following formulations, where n is an integer number and t=nTs=n/fs .

$$s(t)=\cos(2\pi f0/fs)-\sin(2\pi f0/fs) \qquad (i(t)=1,q(t)=1) \qquad (11)$$

$$s(t)=\cos(2\pi f0/fs)+\sin(2\pi f0/fs) \qquad (i(t)=1,q(t)=-1) \qquad (12)$$

$$s(t)=-\cos(2\pi f0/fs)-\sin(2\pi f0/fs) \qquad (i(t)=-1,q(t)=1) \qquad (13)$$

$$s(t)=-\cos(2\pi f0/fs)+\sin(2\pi f0/fs) \qquad (i(t)=-1,q(t)=-1) \qquad (14)$$

As described above, a signal of the cosine carrier is kept when i(t)=1, a signal of the cosine carrier is inverted when i(t)=-1, a signal of the sine carrier is kept when q(t)=1 and a signal of the sine carrier is inverted when q(t)=-1. Then a digital orthogonal signal is obtained by adding these coded cosine carriers and coded sine carriers.

D/A converter 67 converts a digital orthogonal signal into an analogue orthogonal signal, and outputs the converted analogue signal to another apparatus via output terminal 29.

Next a flow of operations at a modulator in the fourth embodiment of the present invention is explained.

First the frequency of an I signal inputted to input terminal 21 is increased to a desired frequency at interpolating filter 61, then the signal is one bit $\Delta\Sigma$ modulated at one bit $\Delta\Sigma$ modulation circuit 62. In the similar manner, the frequency of an Q signal inputted to input terminal 24 is increased to a desired frequency at interpolating filter 63, then the signal is one bit $\Delta\Sigma$ modulated at one bit $\Delta\Sigma$ modulation circuit 64.

Next at orthogonal modulation circuit 66, a signal of the cosine carrier inputted from carrier generating circuit 65 is kept when the one bit $\Delta\Sigma$ modulation I signal is 1, and a signal of the cosine carrier is inverted when the one bit $\Delta\Sigma$ modulation I signal is -1. In the similar manner, a signal of the sine carrier inputted from carrier generating circuit 65 is kept when the one bit $\Delta\Sigma$ modulation Q signal is 1, and a signal of the cosine carrier is inverted when the one bit $\Delta\Sigma$ modulation Q signal is -1. And the coded cosine carriers and coded sine carriers are added, then the digital orthogonal signal with an intermediate frequency is obtained.

Next at D/A converter, the digital orthogonal signal is converted into the analogue orthogonal signal, which is outputted to another apparatus via output terminal 29.

Since the modulator having the configuration described above does not need a multiplier for an orthogonal modulation even in the case where an arbitrary sampling frequency is used, the calculation volume can be largely reduced.

(Fifth embodiment)

In the fifth embodiment of the present invention, an explanation is given to a modulator for an orthogonal modulation which $\Delta\Sigma$ modulates a digital baseband signal after increasing its frequency to a desired sampling frequency, generates an address based on the $\Delta\Sigma$ modulation output value, accesses, using the address, a reading section in which the orthogonal modulation result is stored, and orthogonal modulates by reading the orthogonal modulation result corresponding to the access.

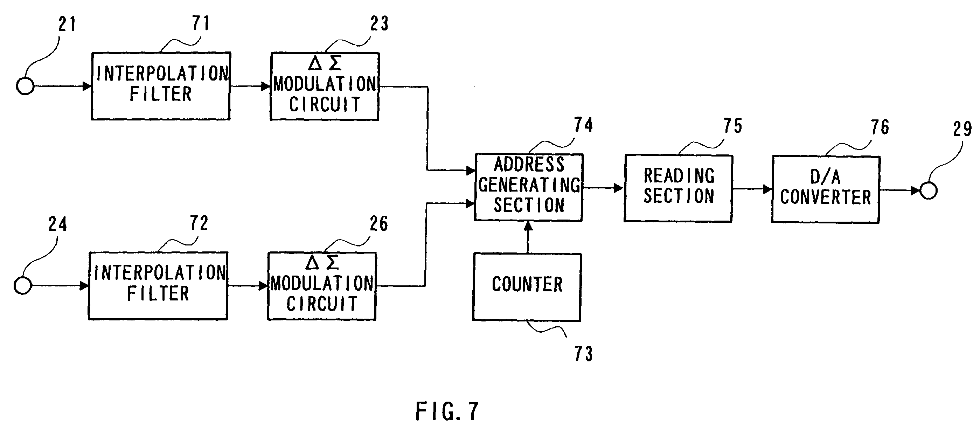

FIG.7 is a block diagram illustrating a configuration at a modulator in the fifth embodiment of the present invention. In addition the common part to that in FIG.1 has the same symbols as that in FIG.1 to omit the explanation.

In FIG.7, interpolation filter 71 increases the frequency of an I signal inputted from input terminal 21 to a desired sampling frequency fs. In the similar manner, interpolation filter 72 increases the frequency of an Q signal inputted from input terminal 24 to a desired sampling frequency fs. Counter 73 outputs pulse signals synchronized with outputs from $\Delta\Sigma$ modulation circuits 23 and 26, and outputs them to address generating section 74. Address generating section 74 generates an address corresponding to the inputted $\Delta\Sigma$ modulation output, and accesses read section 75 using the address.

Read section 75 stores the orthogonal modulation results calculated in advance at an internal memory. For instance, in the case where each of the $\Delta\Sigma$ modulation outputs of I signal and Q signal is one bit, the orthogonal modulation results that should be outputted at each timing are four types shown in formulation (11) up to (14) described previously. Read section 75 stores the four types of the orthogonal modulation results in the order of formulation (11) up to (14) at the internal memory. And based on the address accessed by address generating section 74, it reads the orthogonal modulation result stored at the internal memory, and outputs it as a digital orthogonal signal with (at) an intermediate frequency to D/A converter 76.

D/A converter 76 converts the digital orthogonal signal into an analogue orthogonal signal, and outputs the converted analogue orthogonal signal to another apparatus via output terminal 29.

Next a flow of operations at a modulator in the fifth embodiment of the present invention is explained.

First interpolation filter 71 increases the frequency of an I signal inputted to input terminal 21 and the signal is $\Delta\Sigma$ modulated at $\Delta\Sigma$ modulation circuit 23. In the similar manner, interpolation filter 72 increases the frequency of a Q signal inputted to input terminal 24 and the signal is $\Delta\Sigma$ modulated at $\Delta\Sigma$ modulation circuit 26.

Next address generating section 74 generates an address synchronized with a pulse signal outputted from counter 73 based on the $\Delta\Sigma$ modulation outputs of I signal and Q signal. This address is used to access read section 75. And the orthogonal modulation result corresponding to the address is read from read section 75, and the digital orthogonal signal with an intermediate frequency is obtained.

Next at D/A converter 76, the digital orthogonal signal is converted into an analogue orthogonal signal, which is outputted from an output terminal.

At the modulator having the configuration described above, even in the case of the orthogonal modulation of $\Delta\Sigma$ modulation signal at an arbitrary sampling frequency, a multiplier is unnecessary when an orthogonal modulation is executed . The modulator does not need multibits summations and subtractions compared to a modulator in the fourth embodiment of the present invention, which allows to further reduce the consumed electric power.

In addition each embodiment of the present invention described above, the degree and output precision of $\Delta\Sigma$ modulator are not especially limited.

Industrial Applicability

The present invention relates to a modulation apparatus and a modulation method for orthogonal modulating a baseband signal, which are appropriate for reducing the consumed electric power and useful in a digital mobile communication and so on.

**Claims**

**1.** A modulation apparatus comprising:

> frequency modulation means for modulating center frequencies of an in-phase component and a quadrature phase component of a digital baseband signal to four times the frequency of an intermediate frequency;
> $\Delta\Sigma$ modulation means for $\Delta\Sigma$ modulating the frequency converted digital baseband signal;
> removing means for removing an unnecessary frequency component from the $\Delta\Sigma$ modulated digital baseband signal; and

orthogonal modulation means for generating a digital orthogonal signal with the intermediate frequency from the digital baseband signal in which the unnecessary frequency component is removed.

2. The modulation apparatus according to claim 1, wherein said orthogonal modulation means selects a signal according to the order of an in-phase component, a code inverted signal of a quadrature phase component, a code inverted signal of in-phase component and a quadrature phase component of the digital baseband signal at a sampling frequency that is four times the frequency of the intermediate frequency.

3. The modulation apparatus according to claim 1, wherein said removing means comprises a low pass filter allowing to pass only a low frequency component.

4. The modulation apparatus according to claim 1, wherein said removing means includes a delay circuit for delaying the in-phase component and the quadrature phase component of the digital baseband signal by one sampling frequency, and an adder for adding an output component at said delay circuit to the in-phase component and the quadrature phase component of the digital baseband signal.

5. A modulation apparatus comprising:

frequency modulation means for modulating center frequencies of an in-phase component and a quadrature phase component of a digital baseband signal to four times the frequency of an intermediate frequency;
$\Delta\Sigma$ modulation means for $\Delta\Sigma$ modulating the frequency converted digital baseband signal;
a delay circuit for delaying the $\Delta\Sigma$ modulated digital baseband signal by one sampling frequency;
first orthogonal modulation means for generating a first digital orthogonal signal with an intermediate frequency from the $\Delta\Sigma$ modulated digital baseband signal;
second orthogonal modulation means for generating a second digital orthogonal signal with the intermediate frequency from the delayed digital baseband signal; and
adding means for adding said first digital orthogonal signal and second digital orthogonal signal.

6. The modulation apparatus according to claim 5, wherein said first orthogonal modulation means and said second orthogonal modulation means concurrently select a signal according to the order of the in-phase component, a code inverted signal of the quadrature phase component, a code inverted signal of the in-phase component and the quadrature phase component of the digital baseband signal by a sampling frequency that is four times the frequency of the intermediate frequency.

7. An modulation apparatus comprising:

one bit $\Delta\Sigma$ modulation means for $\Delta\Sigma$ modulating an in-phase component and a quadrature phase component of a digital baseband signal at each bit;
carrier generating means for generating a cosine carrier and a sine carrier;
carrier converting means for converting said cosine carrier and said sine carrier based on a code of the one bit $\Delta\Sigma$ modulated digital baseband signal; and
a carrier adder for outputting a digital orthogonal signal by adding the converted cosine carrier and the converted sine carrier.

8. The modulation apparatus according to claim 7, wherein said carrier converting means outputs the cosine carrier when a code of the in-phase component of the digital baseband signal is positive, outputs a code inverted cosine carrier when a code of the in-phase component of the digital baseband signal is positive, outputs the sine carrier when a code of the quadrature phase component of the digital baseband signal is positive, and outputs a code inverted sine carrier when a code of the quadrature phase component of the digital baseband signal is negative.

9. A modulation apparatus comprising:

$\Delta\Sigma$ modulation means for $\Delta\Sigma$ modulating an in-phase component and a quadrature phase component of a digital baseband signal;
address generating means for generating an address corresponding to the $\Delta\Sigma$ modulated digital baseband signal; and
reading means for reading out a stored digital orthogonal signal.

**10.** A modulation method comprising the steps of:

> frequency modulating center frequencies of an in-phase component and a quadrature phase component of a digital baseband signal to four times the frequency of an intermediate frequency;
> $\Delta\Sigma$ modulating the frequency converted signal;
> removing an unnecessary frequency component from the $\Delta\Sigma$ modulated digital baseband signal; and
> generating a digital orthogonal signal with the intermediate frequency from the digital baseband signal in which the unnecessary frequency component is removed.

**11.** The modulation method according to claim 10, wherein in said step of generating the digital orthogonal signal, the in-phase component, a code inverted signal of the quadrature phase, a code inverted signal of the in-phase component and the quadrature phase component of the digital baseband signal are selected in the order of said signals by a sampling frequency that is four times the frequency of an intermediate frequency.

**12.** The modulation method according to claim 10, wherein in said step of removing the unnecessary frequency component, the unnecessary frequency component is removed with a low pass filter.

**13.** The modulation method according to claim 10, wherein in said step of removing the unnecessary frequency component, the in-phase component and the quadrature phase component of the digital baseband signal and delayed versions of said components are added, wherein the delay is caused by one sampling frequency.

**14.** A modulation method comprising the steps of:

> modulating center frequencies of an in-phase component and a quadrature phase component of a digital baseband signal to four times the frequency of an intermediate frequency;
> $\Delta\Sigma$ modulating the frequency modulated signal;
> removing an unnecessary frequency component from the $\Delta\Sigma$ modulated signal;
> delaying the $\Delta\Sigma$ modulated signal by one sampling frequency;
> generating a first digital orthogonal signal with an intermediate frequency from the $\Delta\Sigma$ modulated digital baseband signal;
> generating a second digital orthogonal signal with the intermediate frequency from the one sampling frequency delayed digital baseband signal; and
> adding said first digital orthogonal signal and second digital orthogonal signal.

**15.** The modulation method according to claim 14, wherein in said steps of generating a first digital orthogonal signal and generating a second digital orthogonal signal, the in-phase component, a code inverted signal of the quadrature phase component, a code inverted signal of the in-phase component and the quadrature phase component of the digital baseband signal are selected concurrently in said steps according to the order of said signals by a sampling frequency that is four times the frequency of the intermediate frequency.

**16.** A modulation method comprising the steps of:

> $\Delta\Sigma$ modulating an in-phase component and a quadrature phase component of a digital baseband signal at each bit;
> generating a cosine carrier and a sine carrier;
> converting said cosine carrier and said sine carrier based on a code of the one bit $\Delta\Sigma$ modulated digital baseband signal; and
> outputting a digital orthogonal signal by adding the converted cosine carrier and the converted sine carrier.

**17.** The modulation method according to claim 16, wherein in said step of converting said cosine carrier and said sine carrier, a conversion is executed by outputting the cosine carrier when a code of the in-phase component of the digital baseband signal is positive, outputting a code inverted cosine carrier when a code of the in-phase component of the digital baseband signal is positive, outputting the sine carrier when a code of the quadrature phase component of the digital baseband signal is positive, and outputs a code inverted sine carrier when a code of the quadrature phase component of the digital baseband signal is negative

**18.** A modulation method comprising the steps of:

$\Delta\Sigma$ modulating an in-phase component and a quadrature phase component of a digital baseband signal;

generating an address corresponding to a value of the $\Delta\Sigma$ modulated digital baseband signal; and outputting a stored digital orthogonal signal based on said address.

EP 0 909 067 A1

MODULATED
SIGNAL 1 ──○──→ [ Δ Σ MODULATOR ] 2 ──→ ⊗ 3 ──→ ○ 4 AMPLITUDE
MODULATION
OUTPUT

↑
CARRIER
SIGNAL

FIG. 1

FIG. 2

FIG. 3

# FIG. 4

**53 SWITCHING CIRCUIT**

21  22  23

INTERPOLATION FILTER

ΔΣ MODULATION CIRCUIT

**51 DELAY CIRCUIT**

D

54  34  29

ADDER

N BITS D/A CONVERTER

24  25  26

INTERPOLATION FILTER

ΔΣ MODULATION CIRCUIT

**52 DELAY CIRCUIT**

D

FIG. 5

FIG. 6

21 → INTERPOLATION FILTER (61) → 1 BIT ΔΣ MODULATION CIRCUIT (62) → ORTHOGONAL MODULATION CIRCUIT (66) → D/A CONVERTER (67) → 29

24 → INTERPOLATION FILTER (63) → 1 BIT ΔΣ MODULATION CIRCUIT (64) → ORTHOGONAL MODULATION CIRCUIT (66)

CARRIER GENERATING CIRCUIT (65) → ORTHOGONAL MODULATION CIRCUIT (66)

21 ──→ **INTERPOLATION FILTER** (71) ──→ **Δ Σ MODULATION CIRCUIT** (23)

24 ──→ **INTERPOLATION FILTER** (72) ──→ **Δ Σ MODULATION CIRCUIT** (26)

**ADDRESS GENERATING SECTION** (74) ──→ **READING SECTION** (75) ──→ **D/A CONVERTER** (76) ──→ 29

**COUNTER** (73)

FIG. 7

## INTERNATIONAL SEARCH REPORT

| International application No. |
| --- |
| PCT/JP98/00657 |

A. CLASSIFICATION OF SUBJECT MATTER
   Int.Cl⁶ H04L27/20

According to International Patent Classification (IPC) or to both national classification and IPC

B. FIELDS SEARCHED

Minimum documentation searched (classification system followed by classification symbols)
   Int.Cl⁶ H04L27/00-27/38

Documentation searched other than minimum documentation to the extent that such documents are included in the fields searched
   Jitsuyo Shinan Koho          1926-1998
   Kokai Jitsuyo Shinan Koho    1971-1998

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP, 6-21991, A (Toshiba Corp.), January 28, 1994 (28. 01. 94), | 1-3, 9-12, 18 |
| A | Page 3, left column, lines 46 to 48 ; page 5, right column, line 47 to page 6, left column, line 14 ; Fig. 7 & US, 5534827, A & US, 5714916, A | 4-8, 13-17 |
| A | JP, 8-149169, A (Matsushita Electric Industrial Co., Ltd.), June 7, 1996 (07. 06. 96), Page 4, right column, line 27 to page 5, right column, line 6 ; Fig. 1 (Family: none) | 1-18 |
| A | JP, 9-186728, A (Sony Corp.), July 15, 1997 (15. 07. 97), Page 5, right column, lines 7 to 49 ; Fig. 11 & DE, 19654585, A1 | 1-18 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| May 12, 1998 (12. 05. 98) | May 26, 1998 (26. 05. 98) |

| Name and mailing address of the ISA/ | Authorized officer |
| --- | --- |
| Japanese Patent Office | |
| Facsimile No. | Telephone No. |

Form PCT/ISA/210 (second sheet) (July 1992)